# FASCICULE DE BREVET EUROPEEN

(11) **EP 1 469 364 B1**
(45) Date de publication et mention de la délivrance du brevet: **14.05.2008**
(21) Numéro de dépôt: 04008312.3
(22) Date de dépôt: 06.04.2004
(51) Int. Cl.: G05B 19/042

(54) **Procédé de constitution d'un groupe d'éléments dans un réseau domotique**
Verfahren zum Bilden einer Gruppe von Gliedern in einem Gebäudenetzwerk
Method for building up a group of elements in a domestic network

(30) Priorité: 14.04.2003 FR 0304638
(43) Date de publication de la demande: 20.10.2004
(73) Titulaire: SIMU, 70100 Arc-Les-Gray (FR)
(72) Inventeur: Cheron, Eric, 74460 Taninges (FR)
(74) Mandataire: Bugnion Genève

(56) Documents cités:
- EP-A- 0 495 397
- FR-A- 2 755 259
- US-A- 5 844 888

## Description

L'invention concerne un procédé de constitution d'un groupe d'éléments reliés en réseau et commandant des équipements d'un bâtiment. Elle concerne encore une installation comprenant des équipements d'un bâtiment commandés par des éléments reliés en réseau, destinée à mettre en oeuvre un tel procédé, chaque élément comprenant un moyen de programmation, un moyen d'émission de signal d'information, une mémoire contenant un programme de détection de commande de mise en mode d'apprentissage et un programme de détection de fin de mise en mode d'apprentissage.

On connaît du brevet FR 2 755 259, un procédé de mise en correspondance d'élément appartenant à un réseau domotique.

Ce procédé peut être mis en oeuvre par une installation domotique présentant différents éléments ou boîtiers référencés constituant un réseau et permettant de commander des équipements d'un bâtiment tels que des produits de fermeture, d'occultation de protection solaire, d'éclairage, d'alarme ou encore de régulation thermique. La communication entre ces différents éléments est, par exemple, assurée par des ondes électromagnétiques ou par des moyens filaires selon un protocole spécifique.

Chaque élément du réseau domotique comprend une interface de communication et des entrées et des sorties non représentées lui permettant respectivement de recevoir des informations délivrées par des capteurs et de piloter des actionneurs liés aux équipements du bâtiment.

Chaque élément du réseau comprend également un moyen de programmation permettant, à partir d'une action directe de l'utilisateur, de faire basculer l'élément dans un mode d'apprentissage ainsi qu'un moyen d'émission d'un signal d'information. Les moyens de programmation et les moyens d'émission de signaux d'informations peuvent être physiquement intégrés aux éléments ou être déportés vers des boîtiers auxiliaires raccordés aux éléments par des moyens filaires ou sans fils. La liaison entre les boîtiers auxiliaires et les éléments peut notamment se faire par l'intermédiaire du réseau de communication s'il existe un appariement spécifique entre eux.

Les moyens de génération de signaux d'informations peuvent générer par exemple un signal lumineux par exemple par le biais de diodes électroluminescentes ou un signal sonore. Les moyens d'émission de signaux d'information peuvent également consister en une activation des équipements commandés, par exemple: un allumage d'une lampe électrique si l'équipement est un dispositif d'éclairage ou une mise en mouvement si l'équipement est un volet roulant.

L'art antérieur décrit un procédé permettant de mettre en relation, sous forme de groupes, plusieurs éléments d'un réseau domotique de ce type, par exemple afin que ces éléments puissent exécuter une tâche commune à la réception d'un ordre émis par l'un d'entre eux. L'appartenance à un groupe peut consister, par exemple, en la connaissance d'un même nom de groupe, en la connaissance de l'adresse d'un élément maître ou en le partage d'une clé commune ou d'un germe commun.

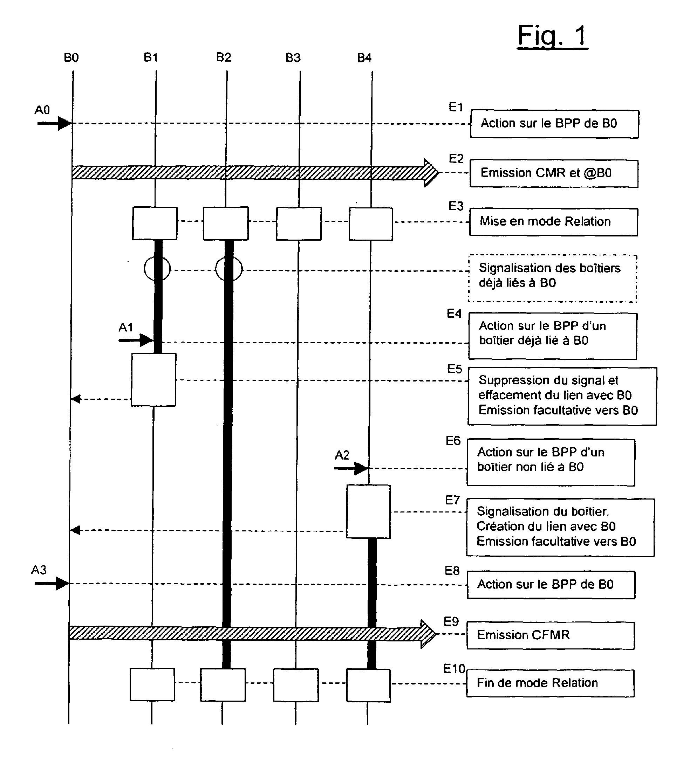

Le procédé de constitution de groupe selon l'art antérieur est décrit en référence à la figure 1. Le temps s'écoule sur cet ordinogramme verticalement de haut en bas. Initialement, on suppose que le réseau domotique comprend déjà un groupe constitué par les éléments 80, B1 et B2 et on suppose que le but de l'installateur est d'exclure B1 du groupe et d'y inclure B4.

Lors d'une première étape E1, l'installateur actionne le moyen de programmation de l'élément B0 constitué par un bouton poussoir BPP. Cet appui constitue l'action référencée A0. Cette action déclenche une étape E2 dans laquelle une commande CMR dite de mise en relation est émise sur le réseau, accompagnée de l'adresse @B0 du boîtier B0.

Lors d'une étape E3 successive à la réception de cette commande CMR par l'ensemble des éléments du réseau, ceux-ci basculent dans un mode d'apprentissage dans lequel ils enregistrent provisoirement l'adresse @B0. Les éléments B1 et B2 déjà liés à l'élément B0 émettent un signal d'information signalant leur liaison à l'élément B0. Cette signalisation est représentée par un trait noir épais.

Lors d'une étape suivante E4, l'installateur appuie sur le bouton poussoir de programmation de l'élément B1. Cette action est référencée A1.

Cette action est interprétée à l'étape E5, comme un ordre de suppression du lien existant entre l'élément B1 et les éléments B0, B1 et B2. Lorsque ce lien est supprimé, l'émission du signal d'information est désactivée et un message peut éventuellement être adressé à l'élément B0 pour l'informer de la suppression du lien.

Lors d'une étape E6, l'installateur appuie sur le bouton poussoir de programmation de l'élément B4. Cette action est référencée A2.

A l'étape E7, cette action est interprétée comme un ordre de création d'un lien entre l'élément B4 et les éléments B0, B2 et B3. Une fois le lien créé, un signal d'information d'appartenance de l'élément B4 au groupe comprenant l'élément B0 est activé et un message peut éventuellement être adressé à l'élément B0 pour l'informer de la création du lien.

A l'étape E8, lorsque toutes les modifications désirées au sein du groupe ont été effectuées, l'installateur appuie de nouveau sur le bouton poussoir de programmation de l'élément B0. Cette action référencée A3 est interprétée comme une fin de session de constitution de groupe. Elle déclenche une étape E9 lors de laquelle une commande de fin de mode d'apprentissage CFMR est émise sur le réseau.

A réception de cette commande, lors d'une étape E10, tous les éléments désactivent le mode d'apprentissage. Les liens établis ou supprimés le restent et définissent un groupe au moins jusqu'à une prochaine session de constitution de groupe.

Ce procédé présente des inconvénients. D'abord, il nécessite l'émission d'un signal d'information continu pendant toute la session de constitution de groupe, qui peut s'avérer longue en particulier lorsque l'installation est complexe, le bâtiment pouvant comporter plusieurs étages et les éléments du réseau pouvant être peu accessibles. Ainsi, dans le cas d'éléments alimentés en énergie de manière autonome, cette consommation prolongée est gênante. Ensuite, l'émission d'un signal continu est problématique quand le signal est émis par l'activation des équipements de l'installation. Par exemple, lorsque le signal est un mouvement d'aller-retour d'un volet roulant motorisé, l'émission prolongée de ce signal peut constituer une gêne visuelle et sonore.

Le but de l'invention est de fournir un procédé de constitution de groupe d'éléments dans un réseau domotique palliant aux inconvénients précédents et améliorant les procédés connus de l'art antérieur. En particulier, l'invention propose un procédé permettant de ne pas utiliser inutilement l'énergie pour signaler l'appartenance ou la non-appartenance des éléments à un groupe et de ne pas provoquer d'émission de signaux gênants. L'invention propose encore une installation permettant la mise en oeuvre d'un tel procédé.

Le procédé selon l'invention caractérisé en ce que lorsque les éléments sont dans un mode d'apprentissage,
- une première action exercée sur l'un des éléments est interprétée comme une interrogation concernant son état d'appartenance au groupe (inclus - exclu) et déclenche l'émission d'un signal d'information de son état, et
- une action suivante exercée sur cet élément est interprétable comme un ordre de modification de son état d'appartenance au groupe.

L'émission d'un signal d'information consécutivement à une action sur l'élément est un premier moyen pour limiter sa durée dans la mesure où, contrairement au procédé connu de l'art antérieur, l'émission du signal ne se fait pas dès le basculement des éléments dans le mode d'apprentissage.

L'élément peut émettre ce signal d'information pendant une temporisation. Ceci constitue un deuxième moyen pour limiter la durée d'émission.

Différents modes d'exécution du procédé sont définis par les revendications dépendantes 2 à 7.

L'installation selon l'invention est caractérisée en ce que la mémoire de chaque élément comprend un programme de détection d'action sur le moyen de programmation, de gestion de temporisation et d'émission d'un signal d'information.

Au moins un des éléments peut présenter un moyen de programmation et /ou un moyen d'émission de signal d'information physiquement séparé de l'élément.

Le dessin annexé représente, à titre d'exemple, un mode d'exécution du procédé selon l'invention.
La figure 1 est un diagramme temporel illustrant un procédé de constitution de groupe connu de l'art antérieur.
La figure 2 est un diagramme temporel illustrant un mode d'exécution du procédé de constitution de groupe selon l'invention.
La figure 3 est un schéma d'une installation permettant de mettre en oeuvre le procédé selon l'invention.
La figure 4 représente une série de graphiques temporels permettant d'illustrer différentes variantes d'exécution du procédé selon l'invention.

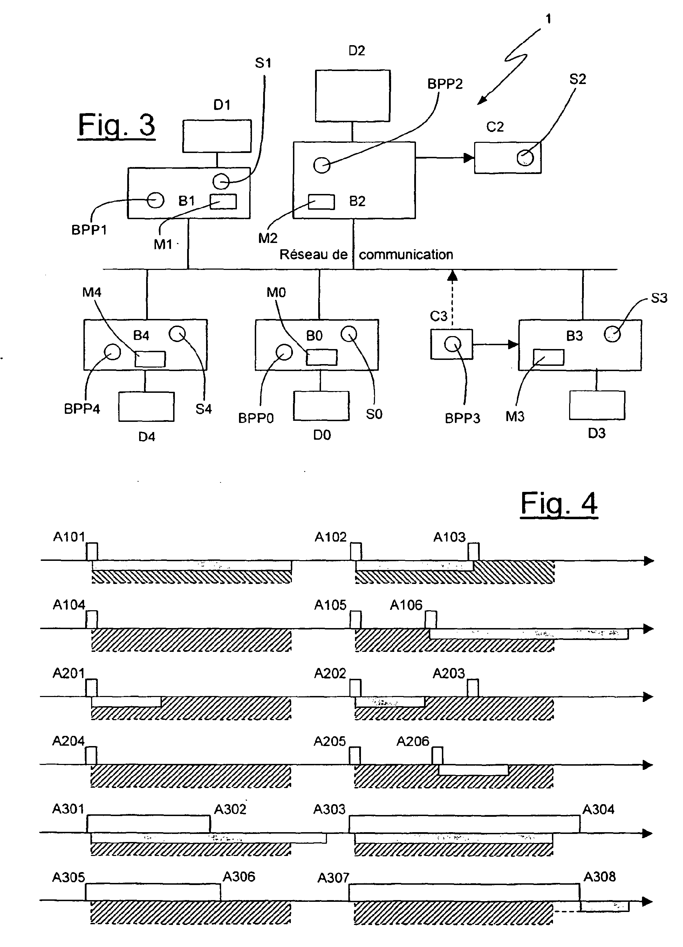

L'installation 1 représentée à la figure 3 comprend principalement des éléments référencés B0, B1, B2, B3 et B4 reliés en réseau et permettant de commander des équipements D0, D1, D2, D3 et D4 d'un bâtiment. Chaque élément comprend un bouton poussoir BPP0, BPP1, BPP2, BPP3 et BPP4 permettant de le faire passer en mode d'apprentissage et un moyen d'émission d'un signal d'information S0, S1, S2, S3 et S4. Chaque élément comprend encore une mémoire M0, M1, M2, M3 et M4 présentant notamment un programme P2 permettant de détecter des actions exercées sur les boutons poussoirs, de gérer des temporisations et des émission de signaux d'informations.

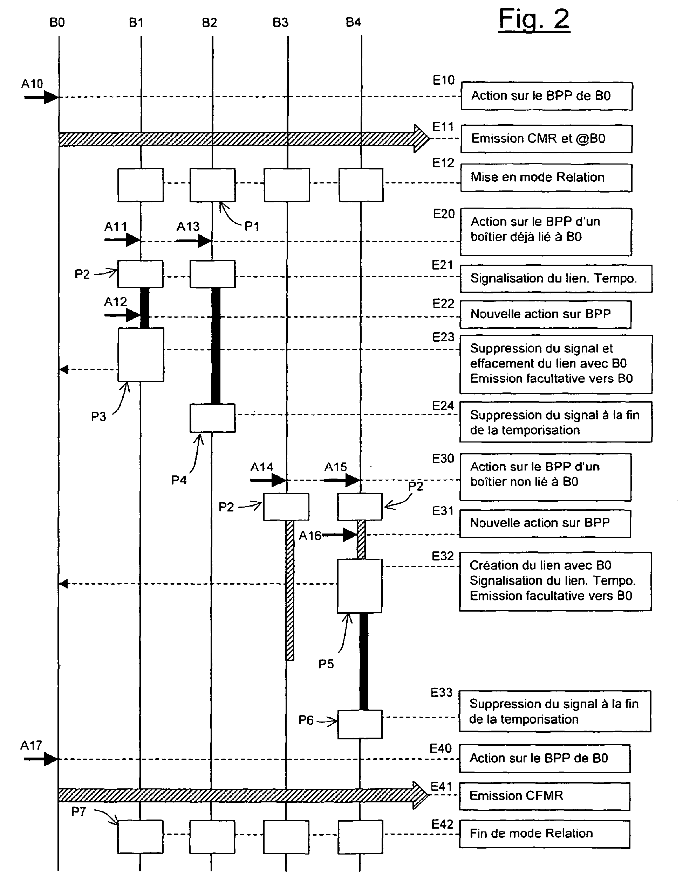

Dans le procédé de constitution de groupe illustré à la figure 2, on suppose qu'un groupe initial comprenant les éléments B0, B1 et B2 est déjà constitué et que le but de l'installateur est d'exclure de ce groupe l'élément B1 et d'y inclure l'élément B4.

Les trois premières étapes référencées E10 à E12 sont identiques aux étapes E1 à E3 décrites en référence à la figure 1 et permettent d'initialiser une session de constitution de groupe d'éléments.

Les différents éléments du réseau comportent un sous programme P1 ou un bloc fonctionnel susceptible de reconnaître une commande de mise en mode d'apprentissage CMR et, une fois dans ce mode, d'enregistrer au moins provisoirement l'adresse @B0 accompagnant la commande CMR. Contrairement au procédé connu de l'art antérieur, le basculement dans le mode d'apprentissage de chacun des éléments ne provoque pas d'émission de signal d'appartenance ou de non-appartenance au groupe initial d'éléments.

Lors d'une étape E20, l'installateur provoque des actions A11 et A13 sur les éléments B1 et B2 appartenant au groupe initial. Ces actions ne seront en principe pas effectuées de manière simultanée. L'installateur s'occupe normalement d'un des éléments avant de s'occuper de l'autre.

On considère d'abord la succession d'actions concernant l'élément B1. Lors d'une étape B1/E21, l'action A11 provoque l'activation d'un sous-programme P2. Ce sous-programme teste l'existence d'un lien entre l'élément B0 et l'élément B1. Après constat de l'existence de ce lien et donc de l'appartenance de l'élément B1 au groupe, l'élément B1 active alors une temporisation de durée T et émet un signal informant de son appartenance au groupe. L'émission de ce signal est représentée par un trait noir épais. Lors d'une nouvelle étape B1/E22, l'installateur exerce une action A12 sur le bouton poussoir BPP de l'élément B1 avant l'échéance de la temporisation T. Cette action entraîne une étape B1/E23, au cours de laquelle un sous-programme P3 est activé et interprète cette action comme une commande d'effacement du lien existant entre l'élément B1 et le groupe. Une fois le lien supprimé c'est-à-dire une fois l'élément B1 exclu du groupe, l'émission du signal d'information est désactivée. Un message peut éventuellement être adressé à l'élément B0 pour l'informer de la suppression du lien. Ce message peut être utilisé par l'ensemble des éléments du groupe, voire même par l'ensemble des éléments du réseau.

L'élément B1 ne change alors plus d'état jusqu'à la fin de la session de constitution de groupe.

On considère maintenant la succession d'actions concernant l'élément B2. Lors d'une étape B2/E21, l'action A13 provoque l'activation du sous-programme P2. Ce sous-programme teste, comme vu précédemment, l'existence d'un lien entre l'élément B0 et l'élément B2. Après constat de l'existence de ce lien et donc de l'appartenance de l'élément B2 au groupe, l'élément B2 active alors une temporisation de durée T et émet un signal informant de son appartenance au groupe. L'émission de ce signal est représentée par un trait noir épais. Lors d'une nouvelle étape B1/E24, la temporisation échoit sans que l'installateur ait exercé d'action sur le bouton poussoir BPP de l'élément B2. Ceci provoque l'activation d'un sous-programme P4 qui met fin à l'émission du signal d'information. Aucune action n'ayant été détectée pendant la durée de la temporisation, l'élément B2 est toujours inclus dans le groupe. L'élément B2 ne change alors plus d'état jusqu'à la fin de la session de constitution de groupe.

Lors d'une étape E30, l'installateur provoque des actions A14 et A15 sur des éléments B3 et B4 n'appartenant pas au groupe. Ces actions ne seront en principe pas effectuées de manière simultanée. L'installateur s'occupe normalement d'un des éléments avant de s'occuper de l'autre.

On considère d'abord la succession d'actions concernant l'élément B3. Lors d'une étape B3/E30, l'action A14 provoque l'activation d'un sous-programme P2. Ce sous-programme teste l'existence d'un lien entre l'élément B0 et l'élément B3. Après constat de l'absence de ce lien et donc de la non-appartenance de l'élément B3 au groupe, l'élément B3 active alors une temporisation de durée T (représentée par le rectangle hachuré) et émet un signal ou n'émet pas de signal pour signifier sa non-appartenance au groupe. Aucune action n'ayant été détectée pendant la temporisation, aucun changement d'état de l'élément B3 n'est effectué. L'élément B3 reste exclu du groupe et ne change plus d'état jusqu'à la fin de la session de constitution de groupe.

On considère d'abord la succession d'actions concernant l'élément B4. Lors d'une étape B4/E30, l'action A15 provoque l'activation d'un sous-programme P2. Ce sous-programme teste l'existence d'un lien entre l'élément B0 et l'élément B4. Après constat de l'absence de ce lien et donc de la non-appartenance de l'élément B4 au groupe, l'élément B4 active alors une temporisation de durée T et émet un signal ou n'émet pas de signal pour signifier sa non-appartenance au groupe. Lors d'une nouvelle étape B4/E31, l'installateur exerce une action A16 sur le bouton poussoir BPP de l'élément B4 avant l'échéance de la temporisation T. Cette action entraîne une étape B4/E32, au cours de laquelle un sous-programme P5 est activé et interprète cette action comme une commande de création d'un lien entre l'élément B4 et l'élément B0. Cette action déclenche également une temporisation. Une fois le lien créé, c'est-à-dire une fois l'élément B4 inclus dans le groupe, l'émission d'un signal d'information de l'appartenance de l'élément B4 au groupe est activée. Un message peut éventuellement être adressé à l'élément B0 pour l'informer de la création du lien. Ce message peut être utilisé par l'ensemble des éléments du groupe, voire même par l'ensemble des éléments du réseau.

La fin de la temporisation déclenchée par l'action A16, entraîne l'étape E33, lors de laquelle un sous-programme permet de constater qu'aucune action n'est venue remettre en question la création du lien précédent et qui met fin à l'émission du signal d'information. L'élément B4 reste inclus dans le groupe et ne change plus d'état jusqu'à la fin de la session de constitution de groupe.

Bien entendu, l'intérêt du procédé est de permettre de modifier à plusieurs reprises les états (inclus/exclu) des différents éléments du réseau au cours d'une même session de groupage, par succession aléatoire des quatre cas de figures qui viennent d'être vus. Dans le cas décrit ici, l'installateur décide de mettre fin à la session de constitution de groupe par une action A17, qui, comme dans l'art antérieur, donne lieu à émission d'une commande CFMR de fin de mode d'apprentissage.

A l'issue de la session de constitution de groupe, l'élément B1 a été exclu du groupe, l'élément B4 y a été intégré, l'élément B2 reste dans le groupe et l'élément B3 reste en dehors du groupe.

La mise en oeuvre de l'invention se prête à de nombreuses variantes, notamment selon qu'on utilise un moyen de commande de programmation sous forme de bouton poussoir à impulsion fugitive ou maintenue, et selon le mode d'émission de signaux d'informations retenu.

La figure 4 illustre trois variantes d'exécution du procédé, avec des actions ayant lieu pendant une session de constitution de groupe. Le temps s'écoule sur cette figure horizontalement de gauche à droite.

Dans le cas d'un moyen de programmation tel qu'un bouton poussoir à impulsions fugitives, chaque impulsion (enfoncement-relâchement) du bouton est assimilée à une seule action. Sur la figure 4, ces actions sont représentées par des rectangles blancs étroits référencés A101 à A106 et A201 à A206.

Dans le cas d'un moyen de programmation tel qu'un bouton poussoir permettant des impulsions maintenues, l'enfoncement du bouton est assimilé à une première action (par exemple A301) tandis que son relâchement est assimilé à une deuxième action (par exemple A302). La durée d'enfoncement de la touche est matérialisée par un rectangle blanc.

Une première variante est représentée sur les deux premières lignes de la figure 4. Le moyen de programmation est un bouton poussoir à impulsions fugitives. La première ligne correspond au cas d'un élément appartenant déjà au groupe au moment où a lieu l'action sur le bouton poussoir BPP. Une action A101 provoque le déclenchement d'une temporisation T représentée par un rectangle hachuré et l'activation du signal d'information est représenté par un rectangle gris foncé. L'émission du signal d'information cesse si aucune nouvelle action n'est détectée pendant la temporisation T. L'élément fait alors toujours partie du groupe.

Une action A102 « interroge » de nouveau l'élément sur son état. De nouveau, la temporisation T et l'émission du signal d'information sont activés. Cependant, cette fois, une nouvelle action A103 a lieu avant l'échéance de la temporisation. Cette action est alors interprétée comme une commande d'exclusion du groupe, et le signal d'information de l'appartenance de l'élément au groupe est désactivé. Il est possible et préférable à ce stade de désactiver également la temporisation T. Elle est cependant représentée ici comme se déroulant jusqu'à son terme pour bien montrer que l'action A103 a lieu avant son échéance.

La deuxième ligne correspond donc au cas où l'élément n'appartient pas au groupe au moment où a lieu l'action sur le bouton BPP. Une action A104 provoque le déclenchement d'une temporisation T mais ne provoque pas d'émission de signal. Aucune action n'ayant lieu pendant la temporisation, l'élément reste exclu du groupe. Une action A105 provoque de nouveau le déclenchement de la temporisation T. Cette fois, une action A106 a lieu avant l'expiration de la temporisation. Cette action est alors interprétée comme commande de rattachement de l'élément au groupe. Un lien est créé entre l'élément et le groupe et un signal témoignant de cette création ou de l'appartenance au groupe est activé. De manière préférée, la temporisation T est alors désactivée et une nouvelle temporisation T' est activée. L'élément se retrouve ainsi après l'action A106 dans un état comparable à celui apparaissant après l'action A101.

Aux troisième et quatrième lignes, on se place dans le cas d'une deuxième variante caractérisée par l'émission d'un signal d'information court, notamment afin de préserver encore plus l'énergie consommée ou pour éviter de longs mouvements quand le signal consiste en le déplacement d'un équipement par un actionneur. Cette fois, on distingue la temporisation T' d'établissement du signal de la temporisation T pendant laquelle un boîtier « reste à l'écoute » d'un ordre de changement d'état.

Une action A201 est appliquée sur un élément appartenant déjà au groupe. Il y a donc signalisation, pendant une durée T' et « écoute » pendant une durée T ici supérieure à T'. Comme aucune action n'est appliquée pendant la durée d'écoute, l'élément reste dans son état d'appartenance au groupe.

Lors d'une action A202, l'élément émet de nouveau un signal d'information pendant une durée T'. Cette fois, une action A203 a lieu pendant la durée d'écoute T. Cette action est interprétée comme une commande d'exclusion et le lien de communication permettant de rattacher l'élément au groupe est effacé.

Suite aux actions A204 et A205, l'élément, n'appartenant pas au groupe, n'émet pas de signal d'information. Une action suivante A206 a lieu pendant la temporisation d'écoute T et est donc interprétée comme un ordre de rattachement de l'élément au groupe. Cette action A206 provoque l'apprentissage d'un lien de communication et une nouvelle temporisation T' pendant laquelle un signal d'information est émis

De manière préférée, la temporisation T précédente est alors désactivée, et une nouvelle temporisation T est activée, de manière à ce que la situation après l'action A206 devienne identique à celle après l'action A201.

Une troisième variante est illustrée aux deux dernières lignes. On se place dans le cas de l'utilisation d'un moyen de programmation tel qu'un bouton poussoir permettant des impulsions maintenues, en reprenant le cas d'émission d'un signal d'information « long », restant bien entendu très court par rapport à l'art antérieur.

Une action A301 est appliquée sur un élément appartenant déjà au groupe. Cette action provoque le déclenchement d'une temporisation T et l'activation du signal témoignant de l'appartenance de l'élément au groupe. Si le bouton poussoir est relâché pendant la temporisation (action A302), cette action est interprétée comme une confirmation d'appartenance. L'émission du signal est éventuellement prolongée par l'activation d'une temporisation T" faisant suite à cette action.

Par contre, dans le même état initial d'appartenance, si une action A303 se prolonge au-delà du temps T, le signal cesse, et une action A304 est interprétée comme une commande d'exclusion.

Une action A305 est maintenant appliquée à un élément ne faisant pas partie du groupe. Elle provoque une temporisation T mais pas d'activation de signal. Le relâchement de la touche (action A306) se produisant avant la fin de la temporisation est interprété comme une confirmation de l'état d'exclusion de l'élément. Partant de cette situation d'exclusion, une action A307 provoque de nouveau une temporisation « d'écoute » de durée T. Au-delà de cette durée, une action A308 de relâchement est interprétée comme une commande de rattachement.

Le relâchement pendant la temporisation pourrait également être considéré comme un ordre de modification de l'état de l'élément et le relâchement au-delà de la temporisation comme un ordre de maintien de l'état de l'élément.

En variante préférée, on peut aussi prévoir que le changement d'état soit ici provoqué par le dépassement de la temporisation T, autrement dit, que le signal d'appartenance au groupe soit activé dès la fin de cette temporisation.

Il est également préféré de déclencher une nouvelle temporisation T dès la fin de T'. Si la touche reste enfoncée de manière prolongée, on passe alternativement d'une situation de rattachement à une situation d'exclusion et inversement. Mais en définitive, c'est le moment où la touche est relâchée qui détermine l'état final d'appartenance au groupe, selon que la touche est relâchée pendant l'émission d'un signal d'appartenance ou d'exclusion. Selon cette variante, seul le signal est modifié après chaque temporisation tant que la touche reste enfoncée, et le changement d'état éventuel n'est enregistré qu'au moment du relâchement de la touche.

Enfin, l'ergonomie de fonctionnement peut être agrémentée par l'émission d'un signal d'information permettant d'indiquer l'appartenance de l'élément au groupe et un autre signal d'information permettant d'indiquer la non-appartenancee de l'élément au groupe. Par exemple, une diode électroluminescente affiche une lumière verte pour témoigner de l'appartenance au groupe et affiche une lumière orange lors d'une temporisation, pour indiquer l'exclusion du groupe.

Bien que, pour simplifier, on ait décrit uniquement la constitution du groupe par l'apprentissage par chaque élément du groupe de l'adresse d'un élément maître, l'invention est indépendante de la méthode de constitution de groupe utilisée.

Dans cette demande, le terme « action » est à interpréter dans un sens large. En particulier, l'absence d'action pendant la durée de la temporisation peut constituer une « action » devant être interprétée par l'élément comme un ordre de modification de son état d'appartenance au groupe.

## Revendications

1. Procédé de constitution d'un groupe d'éléments (B0, B1, B2, B3, B4) reliés en réseau et commandant des équipements (D0, D1, D2, D3, D4) d'un bâtiment, **caractérisé en ce que** lorsque les éléments sont dans un mode d'apprentissage,
- une première action exercée sur l'un des éléments est interprétée comme une interrogation concernant son état d'appartenance au groupe inclus - exclu et déclenche l'émission d'un signal d'information de son état, et
- une action suivante exercée sur cet élément est interprétable comme un ordre de modification de son état d'appartenance au groupe.

2. Procédé de constitution d'un groupe d'éléments selon la revendication 1, **caractérisé en ce que** l'élément émet ce signal d'information pendant une temporisation (T').

3. Procédé de constitution d'un groupe d'éléments selon l'une quelconque des revendications 1 à 2, **caractérisé en ce que** la première action déclenche une temporisation (T) durant laquelle la ou les actions suivantes exercées sur l'élément sont interprétées par l'élément comme un ordre de modification de son état d'appartenance au groupe.

4. Procédé de constitution d'un groupe d'éléments selon l'une quelconque des revendications 1 à 3, **caractérisé en ce que** la ou les actions suivantes, interprétées par l'élément comme un ordre de modification de son état d'appartenance au groupe, déclenchent une temporisation (T") durant laquelle l'élément émet un signal d'information de son état d'appartenance au groupe.

5. Procédé de constitution d'un groupe d'éléments selon l'une quelconque des revendications 1 à 4, **caractérisé en ce que** la ou les actions suivantes, interprétées par l'élément comme un ordre de modification de son état d'appartenance au groupe, déclenchent une temporisation durant laquelle la ou les actions exercées sur l'élément sont interprétées par l'élément comme un ordre de modification de son état d'appartenance au groupe.

6. Procédé de constitution d'un groupe d'éléments selon l'une quelconque des revendications 1 à 5, **caractérisé en ce que** la ou les actions suivantes exercées sur l'élément, non interprétées par l'élément comme un ordre de modification de son état d'appartenance au groupe, sont interprétées comme une première action exercée sur l'élément.

7. Procédé selon l'une des revendications précédentes, **caractérisé en ce que** l'action exercée sur un élément consiste en une impulsion provoquée manuellement sur un moyen de programmation (BPP0, BPP1, BPP2, BPP3, BPP4) relatif à cet élément.

8. installation (1) comprenant des équipements (D0, D1, D2, D3, D4) d'un bâtiment commandés par des éléments (B0, B1, B2, B3, B4) reliés en réseau, destinée à mettre en oeuvre le procédé selon l'une des revendications précédentes, chaque élément comprenant un moyen de programmation (BPP0, BPP1, BPP2, BPP3, BPP4), un moyen d'émission de signal d'information (S0, S1, S2, S3, S4), une mémoire (M0, M1, M2, M3, M4) contenant un programme (P1) de détection de commande de mise en mode d'apprentissage et un programme (P7) de détection de fin de mise en mode d'apprentissage, **caractérisée en ce que** la mémoire de chaque élément comprend un programme (P2) de détection d'action sur le moyen de programmation, de gestion de temporisation et d'émission d'un signal d'information.

9. Installation selon la revendication 8, **caractérisée en ce qu**'au moins un des éléments présente un moyen de programmation (BPP3) et/ou un moyen d'émission de signal d'information (S2) physiquement séparé de l'élément.

## Claims

1. A method of constituting a group of networked elements (B0, B1, B2, B3, B4) controlling equipment (D0, D1, D2, D3, D4) of a building, **characterised in that** when the elements are in a learning mode,
- a first action exerted on one of the elements is interpreted as an interrogation concerning its state of membership in the group, included - excluded, and triggers the emission of an information signal regarding its state, and
- a following action exerted on this element is interpretable as an order for modifying its state of membership in the group.

2. The method of constituting a group of elements as claimed in claim 1, **characterised in that** the element emits this information signal during a timeout (T').

3. The method of constituting a group of elements as claimed in any of claims 1 to 2, **characterised in that** the first action triggers a timeout (T) during which the following action or actions exerted on the element is or are interpreted by the element as an order for modifying its state of membership in the group.

4. The method of constituting a group of elements as claimed in any one of claims 1 to 3, **characterised in that** the following action or actions, interpreted by the element as an order for modifying its state of membership in the group, triggers or trigger a timeout (T'') during which the element emits an information signal regarding its state of membership in the group.

5. The method of constituting a group of elements as claimed in any one of claims 1 to 4, **characterised in that** the following action or actions, interpreted by the element as an order for modifying its state of membership in the group, triggers or trigger a timeout during which the action or actions exerted on the element is or are interpreted by the element as an order for modifying its state of membership in the group.

6. The method of constituting a group of elements as claimed in any one of claims 1 to 5, **characterised in that** the following action or actions exerted on the element, that is not or are not interpreted by the element as an order for modifying its state of membership in the group, is or are interpreted as a first action exerted on the element.

7. The method according to one of the preceding claims, **characterised in that** the action exerted on an element consists of a pulse caused manually on a programming means (BPP0, BPP1, BPP2, BPP3, BPP4) relating to this element.

8. An installation (1) comprising equipment (D0, D1, D2, D3, D4) of a building, which equipment is controlled by networked elements (B0, B1, B2, B3, B4), which installation is intended to implement the method as claimed in one of the preceding claims, each element comprising a programming means (BPP0, BPP1, BPP2, BPP3, BPP4), a means of emitting an information signal (S0, S1, S2, S3, S4), a memory (M0, M1, M2, M3, M4) containing a program (P1) for detecting a command for placing in learning mode and a program (P7) for detecting end of placement in learning mode, **characterised in that** the memory of each element comprises a program (P2) for detection of action on the means of programming, of management of timeouts and of emission of an information signal.

9. The installation as claimed in claim 8, **characterised in that** at least one of the elements has a programming means (BPP3) and/or a means of emission of information signal (S2) physically separate from the element.

## Patentansprüche

1. Verfahren zur Bildung einer Gruppe von Gliedern (B0, B1, B2, B3, B4), die zu einem Netz zusammengefasst sind und Ausrüstungen (D0, D1, D2, D3, D4) eines Gebäudes steuern, **dadurch gekennzeichnet, dass** im Lernmodus der Glieder
- eine erste Einwirkung auf eines der Glieder als Abfrage interpretiert wird, ob sich das Glied im Zustand des Einschlusses oder des Ausschlusses der Zugehörigkeit zur Gruppe befindet, und die Ausgabe eines Signals über die Information des Zustandes des Gliedes auslöst, und
- eine folgende Einwirkung auf dieses Glied als Befehl zur Änderung seines Zustands zur Gruppenzugehörigkeit interpretierbar ist.

2. Verfahren zur Bildung einer Gruppe von Gliedern nach Anspruch 1, **dadurch gekennzeichnet, dass** das Glied das Informationssignal im Verlauf einer Verweilzeit (T') ausgibt.

3. Verfahren zur Bildung einer Gruppe von Gliedern nach einem der Ansprüche 1 und 2, **dadurch gekennzeichnet, dass** die erste Einwirkung den Beginn einer Verweilzeit (T) auslöst, während derer jede folgende Einwirkung auf das Glied vom Glied als Befehl interpretiert wird, den Zustand seiner Zugehörigkeit zur Gruppe zu ändern.

4. Verfahren zur Bildung einer Gruppe von Gliedern nach einem der Ansprüche 1 bis 3, **dadurch gekennzeichnet, dass** jede folgende Einwirkung, die vom Glied als Befehl interpretiert wird, seinen Zustand der Zugehörigkeit zur Gruppe zu ändern, den Beginn einer Verweilzeit (T") auslöst, während derer das Glied ein Informationssignal über seinen Zustand der Zugehörigkeit zur Gruppe ausgibt.

5. Verfahren zur Bildung einer Gruppe von Gliedern nach einem der Ansprüche 1 bis 4, **dadurch gekennzeichnet, dass** jede folgende Einwirkung, die vom Glied als Befehl interpretiert wird, seinen Zustand der Zugehörigkeit zur Gruppe zu ändern, den Beginn einer Verweilzeit auslöst, während derer die auf das Glied ausgeübten Einwirkungen vom Glied als Befehl interpretiert werden, seinen Zustand der Zugehörigkeit zur Gruppe zu ändern.

6. Verfahren zur Bildung einer Gruppe von Gliedern nach einem der Ansprüche 1 bis 5, **dadurch gekennzeichnet, dass** jede folgende Einwirkung auf das Glied, welche vom Glied nicht als Befehl interpretiert wird, seinen Zustand der Zugehörigkeit zur Gruppe zu ändern, als eine erste Einwirkung auf das Glied interpretiert wird.

7. Verfahren nach einem der vorstehenden Ansprüche, **dadurch gekennzeichnet, dass** die auf das Glied ausgeübte Einwirkung aus einem Impuls besteht, welcher von Hand durch Betätigung eines Programmiermittels (BPP0, BPP1, BPP2, BPP3, BPP4) gegenüber dem Glied hervorgerufen wird.

8. Anlage (1) zur Ausführung des Verfahrens nach einem der vorstehenden Ansprüche, mit Ausrüstungen (D0, D1, D2, D3, D4) eines Gebäudes, die von Gliedern (B0, B1, B2, B3, B4) gesteuert werden, die zu einem Netz zusammengefasst sind, wobei jedes Glied ein Programmiermittel (BPP0, BPP1, BPP2, BPP3, BPP4), ein Mittel zur Ausgabe eines Informationssignals (S0, S1, S2, S3, S4), einen Speicher (M0, M1, M2, M3, M4) mit einem Programm (P1) zur Ermittlung des Befehls zum Übergang in den Lernmodus und ein Programm (P7) zur Ermittlung des Endes des Übergangs in den Lernmodus aufweist, **dadurch gekennzeichnet, dass** der Speicher jedes Gliedes ein Programm (P2) zur Ermittlung von Einwirkungen auf das Programmiermittel, zur Verwaltung der Verweilzeit und zur Ausgabe eines Informationssignals enthält.

9. Anlage nach Anspruch 8, **dadurch gekennzeichnet, dass** mindestens eines der Glieder ein Programmiermittel (BPP3) und/oder ein Mittel zur Ausgabe eines Informationssignals (S2) aufweist, welche vom Glied physikalisch getrennt sind.
